# EUROPÄISCHE PATENTSCHRIFT

(11) **EP 3 157 688 B1**
(45) Veröffentlichungstag und Bekanntmachung des Hinweises auf die Patenterteilung: **18.03.2020**
(21) Anmeldenummer: 15734313.8
(22) Anmeldetag: 16.06.2015
(51) Int. Cl.: B07B 1/42, B07B 13/00, B07B 13/11

(54) **SEPARATOR, INSBESONDERE BALLISTIK SEPARATOR**
SEPARATOR, IN PARTICULAR BALLISTIC SEPARATOR
SEPARATEUR, EN PARTICULIER SÉPARATEUR BALLISTIQUE

(30) Priorität: 17.06.2014 DE 202014004852 U; 02.07.2014 DE 202014005409 U
(43) Veröffentlichungstag der Anmeldung: 26.04.2017
(73) Patentinhaber: LIG GmbH, 42555 Velbert (DE)
(72) Erfinder: SCHULZE BUXLOH, Hendrik, 45527 Hattingen (DE); KREVET, Benjamin, 10822 Mettmann (DE)
(74) Vertreter: Weidener, Jörg Michael
(86) Internationale Anmeldenummer: PCT/EP2015/063482
(87) Internationale Veröffentlichungsnummer: WO 2015/193319

(56) Entgegenhaltungen:
- EP-A2- 2 062 658
- DE-A1-102009 024 308
- DE-A1-102012 111 362
- DE-U1-202011 000 252

## Beschreibung

Die Erfindung betrifft einen Separator, insbesondere einen Ballistik Separator.

Derartige Separatoren sind im Stand der Technik hinlänglich bekannt. Mithilfe von Ballistik Separatoren werden gemischte Materialfraktionen nach Größe, Geometrie und Gewicht klassifiziert und in verschiedene Output-Fraktionen generiert. Dies erleichtert die nachfolgende automatische oder manuelle Sortierung und garantiert die Rückgewinnung sortenreiner Materialfraktionen. Dabei eignet sich ein Ballistik Separator aufgrund seines Separationsprinzips optimal für die Herauslösung organischer Substanzen aus gemischten Abfallstoffen, wie Haus- und Siedlungsabfällen. Ballistik Separatoren dienen demzufolge regelmäßig zur Trennung einer zweidimensionalen oder einer dreidimensionalen Fraktion aus Haus- und Gewerbemüll.

Die bekannten Separatoren bestehen dabei in der Regel aus nebeneinander angeordneten Leisten, den so genannten Paddeln, die kontinuierlich eine kreisförmige Bewegung vollführen. Die Paddel bilden einen Boden, der mit einer Steigung an bzw. in einem Maschinenrahmen angebracht ist. Das zu trennende Gut wird auf der Mitte des Bodens aufgegeben. Die Paddel übertragen einen Impuls auf das zu trennende Gut, der eine individuelle Flugbahn der einzelnen Komponenten des trennenden Gutes hervorruft. Zweidimensionale und leichte Teile erfahren einen Impuls, der eine nach vorn gerichtete Bahnkurve bewirkt. Sie "klettern" auf der Siebfläche nach oben. Dreidimensionale und schwere Teile vollführen eine nach unten gerichtete Flugkurve. Sie "rollen" abwärts. Ein Ballistik Separator trennt außerdem eine dritte Fraktion. Die Paddel sind mit Löchern versehen, so dass der sogenannte Nullanteil und Teile mit entsprechend kleiner Körnung nach unten durchfallen. Aufgrund der permanenten Impulsübertragung auf das Material werden anhaftende Verschmutzungen gelöst und fallen durch die perforierten Leisten. Die Paddel weisen zueinander einen Drehwinkelversatz auf. Es existieren auch Lösungen, bei denen der Boden aus einem Blech und nicht aus einzelnen Paddeln besteht. Die kreisförmige Bewegung des Bleches ist die gleiche wie bei den Paddeln.

Im Stand der Technik ist es auch bekannt, dass die kreisförmige Bewegung der, mit Drehwinkelversatz zueinander angeordneten Paddel entweder mit einer Art Kurbelwelle oder mit auf einer geraden Welle aufgeschobenen Exzenterscheiben erzeugt wird. Bei der zuletzt genannten Lösung besitzt jedes einzelne Paddel jeweils zwei Exzenterscheiben. Jede Exzenterscheibe ist einzeln gelagert. Auch bei einer Kurbelwelle muss jeder Hubzapfen gelagert sein, um die Relativgeschwindigkeit zwischen Kurbelwelle und Paddelaufnahme zu gewährleisten. Nachgewiesenermaßen ist der Herstellungsaufwand für derartige Separatoren sehr hoch. Durch den oben beschriebenen, durchfallenden "Nullanteil" ist die Lagerung zudem einer hohen Verschmutzung ausgesetzt. Ein hoher Verschleiß sowie hohe Stillstands- bzw. Reparaturzeiten sind die Folge.

Die DE 10 2012 111 362 A1 betrifft eine Schwingsiebmaschine mit einem Exzenterantrieb über eine Antriebswelle.

Die DE 10 2009 024 308 A1 offenbart den Oberbegriff des Anspruchs 1 und betrifft eine Antriebsanordnung für einen länglichen Schwingkörper, der sich von mehreren drehangetriebenen Kurbelschwingen mit zueinander parallelen Drehachsen auf einer vorgebbaren Schwingbahnen bewegen lässt. Die Kurbelschwingen sind gelenkig mit dem Schwingkörper gekoppelt.

Die EP 2 062 658 A2 betrifft eine Sortiervorrichtung mit wenigstens einer Antriebswelle, an der Schüttlerkörper befestigt sind. Die Antriebswelle ist als Schwingwelle ausgebildet und weist einen Schwenkwinkel von kleiner 360° auf.

Die DE 20 2011 000 252 U1 betrifft eine Sortiervorrichtung für Abfälle, wobei die Sortiervorrichtung eine durch zwei Seitenwände begrenzte Wanne mit einer vorderen Einfüllöffnung und einer hinteren Auswurföffnung aufweist.

Aufgabe der Erfindung ist es daher, einen Separator, insbesondere Ballistik Separator vorzuschlagen, der zumindest einen der zuvor beschriebenen Nachteile des Standes der Technik nicht mehr aufweist.

Die Erfindung geht von dem zuvor beschriebenen Stand der Technik aus und schlägt zur Lösung der gestellten Aufgabe einen Separator mit den Merkmalen des unabhängigen Anspruchs 1 vor.

Erfindungsgemäß ist der Separator, insbesondere Balistik-Separator, zur Trennung von gemischten Abfallstoffen vorgesehen. Wenigstens zwei nebeneinander angeordnete Paddel bzw. Leisten sind in einem Rahmen bewegbar angeordnet und bilden so einen Boden, wobei der Boden mit einer Steigung bezüglich der Aufstellfläche des Separators in dem Rahmen angeordnet ist, und der Boden zumindest einseitig an bzw. auf einer Welle an wenigstens einer Paddelaufnahme so gelagert ist, dass der Boden in eine Drehbewegung versetzbar ist, wobei eine Antriebseinheit zur Erzeugung der Drehbewegung vorgesehen ist, die die wenigstens eine Welle antreibt, und der Separator sich dadurch auszeichnet, dass die Welle als ein exzentrisch gelagertes Außenrohr bzw. als Exzenterrohr vorgesehen ist, in dem Exzenterrohr Exzenterscheiben auf einer inneren Welle befestigt bzw. fixiert sind, zwischen Exzenterscheibe und Exzenterrohr eine Lagerung vorgesehen ist und die Paddelaufnahme an dem Exzenterrohr angeordnet ist. Dadurch, dass jetzt die Lagerung in dem Exzenterrohr vorgesehen ist, findet eine Verschmutzung des Exzenterrohres nur äußerlich statt, so dass kein Schmutz bzw. keine Verunreinigungen an die empfindlichen Lagerstellen gelangen kann bzw. können. Die wenigstens eine Welle ist am Rahmen gelagert und wird von der Antriebseinheit angetrieben, allerdings so, dass auch dort keine Verschmutzungen hingelangen können bzw. der Verschmutzungsanteil sehr gering ist. Dadurch werden natürlich der Verschleiß und die Ausfallzeiten erheblich minimiert. Der Separator kann deutlich länger im bestimmungsgemäßen Einsatz bleiben, als die Separatoren nach dem Stand der Technik. Durch die erfindungsgemäße Lösung ist es zudem möglich, die Gesamtbreite des Bodens zu vergrößern, da man anders als bei einem Kurbelwelleneinsatz hier einen minimierten Aufwand bei der Herstellung hat, in dem man lediglich Exzenterscheiben auf einer Welle befestigt und diese Welle dann mit dem Exzenterrohr umgibt. Dadurch ist es natürlich möglich, entsprechend viele Paddel nebeneinander zur Bildung des Bodens bzw. einer Siebfläche anzuordnen.

Erfindungsgemäß ist vorgesehen, dass wenigstens zwei nebeneinander angeordnete Exzenterrohre vorgesehen sind, deren innere Wellen einen Drehwinkelversatz aufweisen. Dieser Drehwinkelversatz ist notwendig, um eine abwechselnd schwingende Bewegung des Bodens bzw. der den Boden bildenden Paddel zu erhalten. Vorteilhafter Weise sind natürlich die Paddel beidseitig an dem Exzenterrohres befestigt bzw. gelagert, um eine gleichmäßigere Belastung zu erhalten. Erfindungsgemäß ist es allerdings ausreichend, wenn zwei nebeneinander angeordnete Exzenterrohre vorgesehen sind.

Eine vorteilhafte Weiterbildung der Erfindung ist dadurch gekennzeichnet, dass der Drehwinkelversatz zwischen 120 bis 180 Grad beträgt. Der Drehwinkelversatz wird dabei bevorzugt so gewählt, dass wenn beispielsweise zwei oder vier Paddel den Boden bilden der Winkelversatz 180° beträgt, während der Winkelversatz bei einer Ausgestaltung mit drei oder sechs Paddeln 120° beträgt.

Wie bereits erwähnt, zeichnet sich der erfindungsgemäße Separator auch dadurch aus, dass vier Exzenterrohre vorgesehen sind, wobei zwei Exzenterrohre als erstes Exzenterrohrpaar am in Aufstellrichtung oberen Ende des Bodens und zwei weitere Exzenterrohre als zweites Exzenterrohrpaar am unteren Ende des Bodens vorgesehen sind. Dies dient der günstigeren Lagerung und insbesondere auch einer gleichmäßigeren Belastung und einer Optimierung des Schwingungsverhaltens der Paddel. Die zuvor beschriebene Ausgestaltung führt auch zur Verhinderung bzw. Verminderung von Rissen oder Brüchen in den Paddeln durch unkontrolliert ablaufende Schwingungen bzw. Drehbewegungen.

Erfindungsgemäß wurde gefunden, dass es möglich ist, dass der Boden von 2, 3, 4, 6, 8, 9 oder 10 nebeneinander angeordneten Paddeln gebildet wird. Je nachdem, welche Breite für den Boden gewählt wird, wird man eine entsprechende Anzahl von Paddeln nebeneinander anordnen. Dabei ist klar, dass immer dann, wenn sich die Anzahl der Paddel durch zwei dividieren lässt, bevorzugt ein Winkelversatz von 180° gewählt wird, während immer dann, wenn sich die Anzahl der Paddel durch drei dividieren lässt bevorzugt ein Winkelversatz von 120° gewählt wird. Demzufolge ist klar, dass die Anzahl der nebeneinander angeordneten Paddel deutlich größer sein kann, als dies im Stand der Technik bisher möglich war.

Erfindungsgemäß ist es weiter vorgesehen, dass die Paddel an Paddelaufnahmen angeordnet bzw. befestigt sind. Die Paddelaufnahme stellt die Verbindung zwischen Welle und Siebpaddel her. Der Drehwinkelversatz muss über die Wellen genau eingehalten werden, da ansonsten, wie bereits erwähnt, Spannungen längs der Paddel auftreten und diese bei längeren Betriebszeiten zum Bruch der Paddel führen. Daher befindet sich in den Paddelaufnahmen ein Puffer, welcher geringe Fertigungstoleranzen ausgleicht. Dabei ist es günstig, wenn die Paddelaufnahmen aus Blattfederelementen gebildet sind. Neben einem günstigeren Verschleißverhalten wird auch eine Optimierung des Schwingungsverhaltens des Bodens erreicht. Die Siebleistung wird dadurch ebenfalls optimiert.

Erfindungsgemäß ist es weiter vorgesehen, dass die Blattfederelemente der Paddelaufnahmen so montiert sind, dass sie lediglich ein Längsspiel erlauben. Diese Maßnahme ist notwendig, um zu verhindern dass die Paddel sich an ihren Flanken gegenseitig berühren. Das würde zum Verschleiß bzw. zur Beschädigung der Paddel führen. Das Längsspiel ist allerdings notwendig, um die bereits erwähnten Spannungen längs der Paddel auszugleichen. Die Erfindung sieht dabei vor, dass für jedes Paddel wenigstens eine Paddelaufnahme vorgesehen ist.

Für die Erzeugung der Auf- und Ab-Bewegung bzw. der kreisförmigen Bewegungen der Paddel ist eine Antriebseinheit vorgesehen. Die Antriebseinheit wird von einem Motor und von Übertragungselementen für eine Drehbewegung gebildet. Dabei ist die Antriebseinheit dafür verantwortlich, dass die Exzenterrohre insbesondere bei einem Winkelversatz von 180° der Wellenpaare sowohl am oberen als auch am unteren Teil der Maschine bzw. des Bodens synchron angetrieben werden.

Dabei hat es sich als günstig erwiesen, wenn der Motor am Rahmen zwischen den Exzenterwellen außen und mittig angeordnet ist.

Es ist weiterhin erfindungsgemäß gefunden worden, dass als Übertragungselemente Zahnriemen mit entsprechend ausgebildeten Zahnriemenscheiben vorgesehen sind, um die Exzenterrohre in eine Drehbewegung zu versetzen.

Dabei werden benachbarte Exzenterrohre von Synchronisationsriemen angetrieben, um die gewünschte Synchronität hält der Wellenpaare zu erreichen.

Um zu verhindern, dass das Exzenterrohr bzw. die Lagerung im Exzenterrohr verschmutzt wird, ist es nach der Erfindung vorgesehen, dass das Exzenterrohr stirnseitig durch Deckel verschlossen ist. Damit wird neben der Verhinderung des Schmutz Eindringens über die gesamte Breite der Siebfläche bzw. des Bodens zusätzlich erreicht, dass Schmutz stirnseitig nicht in das Exzenterrohr eindringen kann.

Die Erfindung wird nachfolgend anhand von Ausführungsbeispielen weiter beschrieben. Es zeigen:

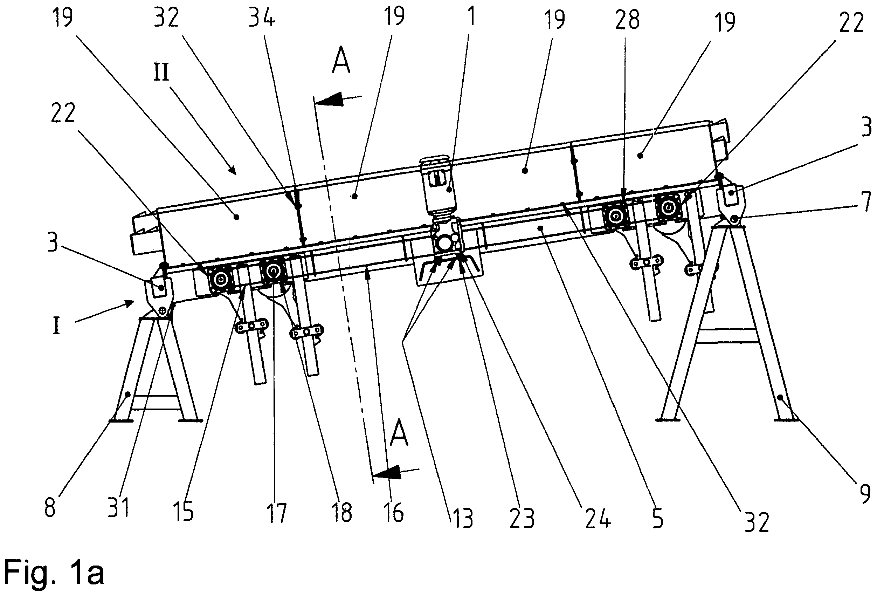

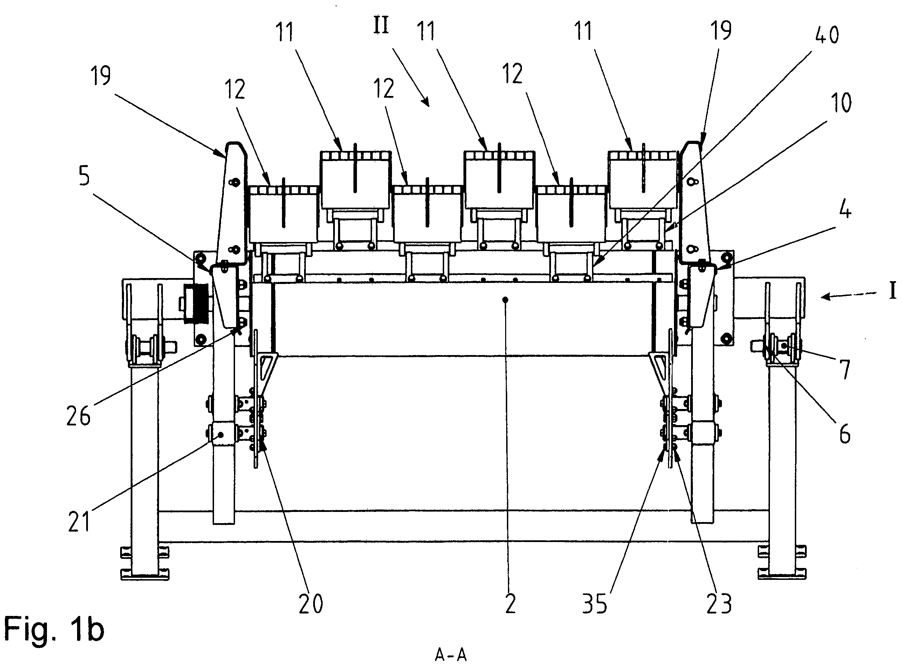

- Fig. 1 a: eine Seitenansicht einer Ausführungsform des erfindungsgemäßen Separators mit 6 Paddeln,
- Fig. 1 b: Ansicht des erfindungsgemäßen Separators an der Schnittlinie A - A der Fig. 1 a,
- Fig. 2a: eine Vorderansicht des erfindungsgemäßen Separators nach Fig. 1 a,
- Fig. 2b: Ansicht des erfindungsgemäßen Separators an der Schnittlinie B - B der Fig. 2a und

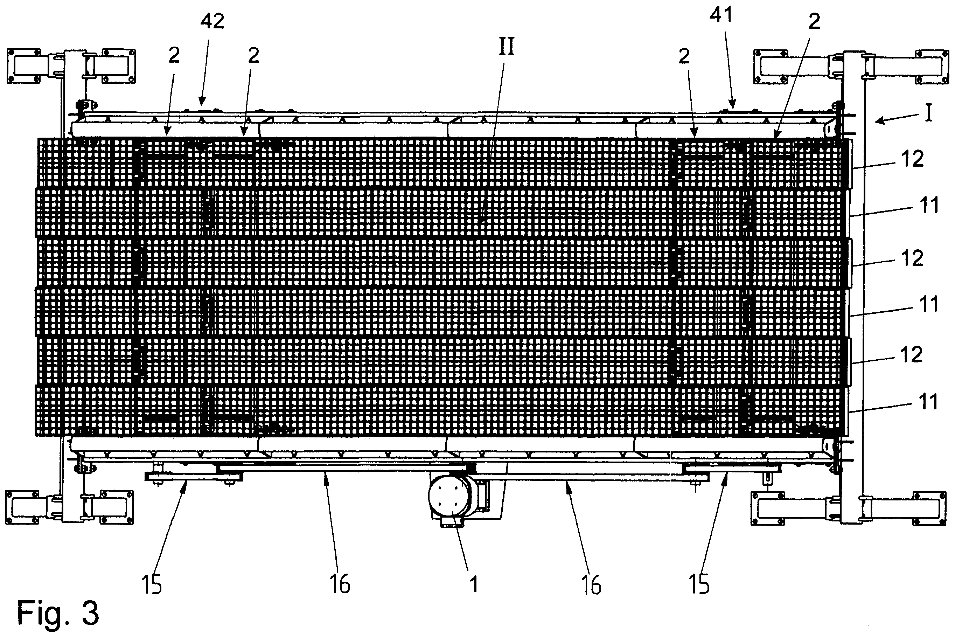

- Fig. 3: Draufsicht auf den erfindungsgemäßen Separator in der Ausführung nach den Fig. 1 a und 1 b.

Die Erfindung wird nachfolgend anhand eines Ausführungsbeispiels beschrieben. Dabei zeigen die einzelnen Figuren unterschiedliche Ansichten bzw. Schnittdarstellungen einer Ausführungsform des erfindungsgemäßen Separators. Dabei werden in allen Figuren durchgehend gleiche Bezugszeichen für analoge Merkmale verwendet, so dass die Erfindung im Komplex vorgestellt wird.

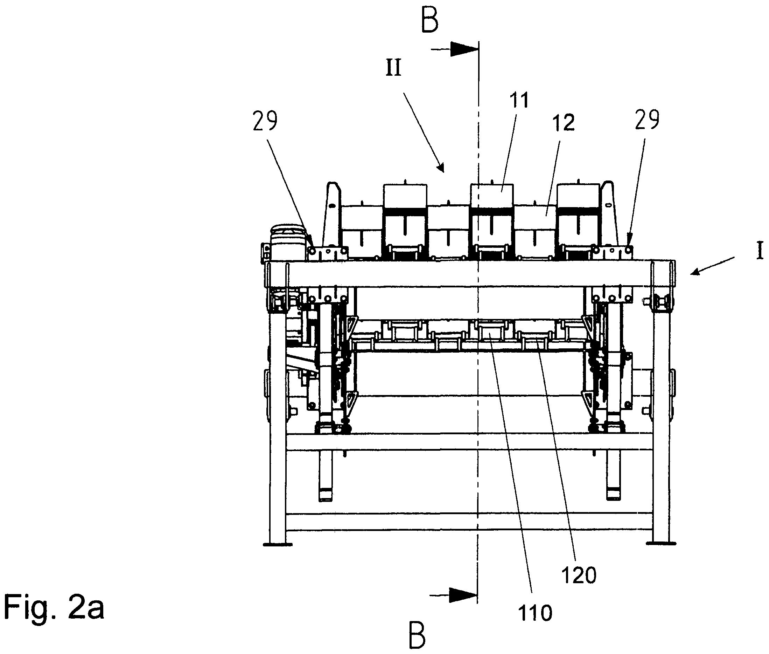

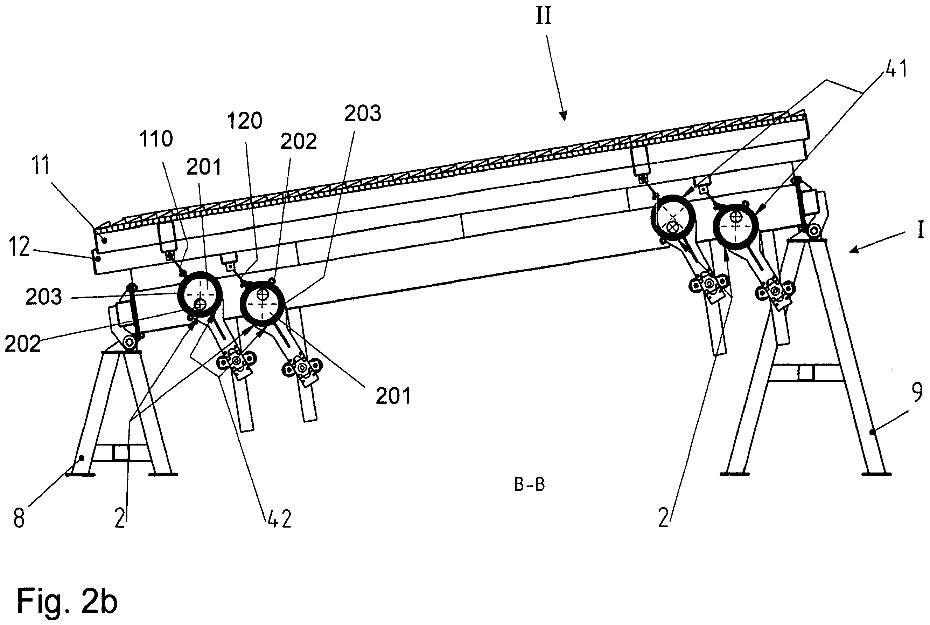

In der Fig. 1 a ist eine Seitenansicht des erfindungsgemäßen Separators gezeigt. Der Separator besteht aus einem Rahmen I und dem Boden II. Der Boden II ist an Wellen, die von Exzenterrohren 2 gebildet werden, gelagert. Diese sind sehr gut in der Fig. 2b gezeigt. In dem Exzenterrohr 2 sind Exzenterrohrscheiben 201 auf einer inneren Welle 202 befestigt bzw. fixiert. Zwischen Exzenterscheibe 201 und Exzenterrohr 2 ist eine Lagerung 203 vorgesehen. In der gezeigten Ausführungsform sind insgesamt vier Exzenterrohre vorgesehen (siehe Figur 2b). Dabei sind zwei Exzenterrohre 2 als ein erstes Exzenterrohrpaar 41 am in Aufstellrichtung oberen Ende des Bodens I und zwei weitere Exzenterrohre 2 als zweites Exzenterrohrpaar 42 am unteren Ende des Bodens I vorgesehen. Paddelaufnahmen 110, 120 sind an dem Exzenterrohr 2 angeordnet. Der Boden II wird in der gezeigten Ausführungsform von 6 Paddeln 11, 12 gebildet. Diese Ausgestaltung ist dabei keineswegs einschränkend zu verstehen, sondern verdeutlicht nur eine mögliche Ausführungsform des erfindungsgemäßen Separators. Wie bereits in der Beschreibung weiter vorn erwähnt, ist es möglich, zwei, drei, sechs, acht, neun oder zehn Paddel 11, 12 zu verwenden. Der Rahmen I ist an einer kurzen Aufständerung 8 und einer langen Aufständerung 9 so befestigt bzw. aufgestellt, dass der Boden II bezogen auf die Aufstellfläche in einem steigenden Winkel, von links nach rechts gesehen, angeordnet ist. Der Rahmen I wird weiter gebildet von Stirnrahmen 3 und Rahmenblechen 4, 5. Eine Seitenwand 19 schließt den Rahmen seitlich ab. An den Aufständerungen 8, 9 ist der Rahmen I mittels Bolzen 7, die seitlich durch Scheiben 6 fixiert sind, festgelegt. Eine nicht näher bezeichnete Führungseinheit, zumindest bestehend aus jeweils einer nicht näher bezeichneten Stange, einer Rollenaufnahme 21 und einem Drehstück 20, ist zur seitlichen und senkrechten Führung der Exzenterrohre 2 vorgesehen. Sie befindet sich jeweils links und rechts (siehe Schnitt A - A in Fig. 1 b) neben den Exzenterrohren 2. Der Boden II bzw. die einzelnen Paddel 11, 12 sind über Paddelaufnahmen 110, 120 mit den Exzenterrohren 2 verbunden. Sie werden bevorzugt von Blattfederelementen 10, 40 gebildet. Dabei ist für jedes Paddel 11, 12 mindestens eine Paddelaufnahme 110, 120 an jedem Exzenterrohr 2 vorgesehen. Eine Antriebseinheit, bestehend aus einem Antriebsmotor 1 und Übertragungselementen komplettiert den erfindungsgemäßen Separator. Der Antriebsmotor 1 erzeugt eine Drehbewegung, die über die Übertragungselemente auf die Exzenterrohre 2 übertragen wird. Als Übertragungselemente sind Zahnriemenscheiben 18 und Zahnriemen 15, 16 vorgesehen. So, wird die Drehbewegung synchron auf die Exzenterrohre 2 übertragen. Durch die exzentrische Anordnung der inneren Welle 202 und das vorsehen der Exzenterrohrscheiben 201 in dem Exzenterrohr 2 wird dabei eine schwingende Drehbewegung der Paddel 11, 12 erzeugt. Dies führt zu dem bereits beschriebenen Effekt, dass ein Impuls auf das zu trennende Material übertragen wird, der zur Trennung bzw. Separierung der einzelnen Bestandteile führt. Durch die verdeckte Anordnung der inneren Welle 202 und der Exzenterscheiben 201 in dem Exzenterrohr 2 kein durchfallender Schmutz die Lagerung 203 beeinträchtigen. Die Exzenterrohre 2 sind zudem stirnseitig durch Deckel verschlossen, wodurch ein Eindringen von Schmutzpartikeln nahezu unmöglich wird. Weitere Bezugszeichen in den Zeichnungen bezeichnen verschiedene Maschinenelemente, die nicht von erfindungswesentlicher Bedeutung sind. Es handelt sich dabei um Muttern 23, 26, 31, 34, Schrauben 24, 28, 29, 32, 35, 37 und Scheiben 25, 27, 30, 33, 36. Flanschlager sind mit 22, eine Taperbuchse mit 14 bzw. 17 und ein Distanzblech mit 13 bezeichnet.

## Patentansprüche

1. Separator, insbesondere Ballistik Separator zur Trennung von gemischten Abfallstoffen, wobei wenigstens zwei nebeneinander angeordnete Paddel (11, 12) bzw. Leisten in einem Rahmen (I) bewegbar angeordnet sind und so einen Boden (II) bilden, wobei der Boden mit einer Steigung bezüglich der Aufstellfläche des Separators in dem Rahmen (I) angeordnet ist, und der Boden (II) zumindest einseitig an bzw. auf einer Welle an einer Paddelaufnahme so gelagert ist, dass der Boden (II) in eine Drehbewegung versetzbar ist, wobei eine Antriebseinheit zur Erzeugung der Drehbewegung vorgesehen ist, die die wenigstens eine Welle antreibt,
**dadurch gekennzeichnet,**
**dass** die Welle als ein exzentrisch gelagertes Außenrohr (2), als Exzenterrohr (2) vorgesehen ist, in dem Exzenterrohr (2) Exzenterscheiben (201) auf einer inneren Welle (202) befestigt bzw. fixiert sind, zwischen Exzenterscheibe (201) und Exzenterrohr (2) eine Lagerung (203) vorgesehen ist und die Paddelaufnahme (110, 120) an dem Exzenterrohr (2) angeordnet ist,
**dass** seitlich gesehen wenigstens zwei nebeneinander angeordnete Exzenterrohre (2) vorgesehen sind, deren innere Wellen (202) einen Drehwinkelversatz aufweisen,
**dass** die Paddelaufnahmen (110 120) aus Blattfederelementen (10, 40) gebildet sind und dass die Blattfederelemente (10, 40) der Paddelaufnahmen (110, 120) so montiert sind, dass sie lediglich ein Längsspiel erlauben, um zu verhindern, dass die Paddel (11, 12) sich an ihren Flanken gegenseitig berühren.

2. Separator nach Anspruch 1, **dadurch gekennzeichnet, dass** der Drehwinkelversatz zwischen 120 bis 180 Grad beträgt.

3. Separator nach einem der vorhergehenden Ansprüche, **dadurch gekennzeichnet, dass** vier Exzenterrohre (2) vorgesehen sind, wobei zwei Exzenterrohre (2) als erstes Exzenterrohrpaar (41) am in Aufstellrichtung oberen Ende des Bodens (I) und zwei weitere Exzenterrohre (2) als zweites Exzenterrohrpaar (42) am unteren Ende des Bodens (I) vorgesehen sind.

4. Separator nach einem der vorhergehenden Ansprüche, **dadurch gekennzeichnet, dass** der Boden (I) von 2, 3, 4, 6, 8, 9 oder 10 nebeneinander angeordneten Paddeln (11, 12) gebildet ist.

5. Separator nach einem der vorhergehenden Ansprüche, **dadurch gekennzeichnet, dass** für jedes Paddel (11, 12) eine Paddelaufnahme (110, 120) vorgesehen ist.

6. Separator nach einem der vorhergehenden Ansprüche, **dadurch gekennzeichnet, dass** die Antriebseinheit von einem Motor (1) und von Übertragungselementen für eine Drehbewegung gebildet ist.

7. Separator nach einem der vorhergehenden Ansprüche, **dadurch gekennzeichnet, dass** der Motor (1) am Rahmen (I) zwischen den Exzenterwellen (2) außen und mittig angeordnet ist.

8. Separator nach einem der vorhergehenden Ansprüche, **dadurch gekennzeichnet, dass** als Übertragungselemente Zahnriemen (15, 16) mit entsprechend ausgebildeten Zahnriemenscheiben (18) vorgesehen sind, um die Exzenterrohre (2) in eine Drehbewegung zu versetzen.

9. Separator nach einem der vorhergehenden Ansprüche, **dadurch gekennzeichnet, dass** benachbarte Exzenterrohre (2) von Synchronisationsriemen angetrieben (15) werden.

10. Separator nach einem der vorhergehenden Ansprüche, **dadurch gekennzeichnet, dass** das Exzenterrohr (2) stirnseitig durch Deckel verschlossen ist.

## Claims

1. Separator, in particular ballistic separator for separating mixed waste materials, wherein at least two paddles (11, 12) and/or strips arranged adjacent to one another are movably arranged in a frame (I) and thus form a base (II), wherein the base is arranged with an incline with respect to the installation surface of the separator in the frame (I), and the base (II) is mounted on at least one side at and/or on a shaft on a paddle holder in such a way that the base (II) can be set into a rotational movement, wherein a drive unit is provided for generating the rotational movement, which drives the at least one shaft,
**characterised in that,**
the shaft is provided as an eccentrically mounted outer tube (2), as an eccentric tube (2), in which eccentric tube (2) eccentric disks (201) are attached and/or fixed on an inner shaft (202), a bearing (203) is provided between eccentric disk (201) and eccentric tube (2), and the paddle holder (110, 120) is arranged on the eccentric tube (2),
that at least two eccentric tubes (2) arranged adjacent to one another are provided, the inner shafts (202) of which have a rotational angle offset,
that the paddle holders (110, 120) are formed from leaf spring elements (10, 40) and that the leaf spring elements (10, 40) of the paddle holders (110, 120) are mounted in such a way that they allow only a longitudinal play to prevent the paddles (11, 12) from contacting each other on the flanks thereof.

2. Separator according to claim 1, **characterised in that** the rotational angle offset is between 120 to 180 degrees.

3. Separator according to one of the preceding claims, **characterised in that** four eccentric tubes (2) are provided, wherein two eccentric tubes (2) are provided as the first pair of eccentric tubes (41) at the upper end of the base (I) in the installation direction and two further eccentric tubes (2) are provided as the second pair of eccentric tubes (42) at the lower end of the base (I).

4. Separator according to one of the preceding claims, **characterised in that** the base (I) is formed by 2, 3, 4, 6, 8, 9 or 10 paddles (11, 12) arranged adjacent to one another.

5. Separator according to one of the preceding claims, **characterised in that** a paddle holder (110, 120) is provided for each paddle (11, 12).

6. Separator according to one of the preceding claims, **characterised in that** the drive unit is formed by a motor (1) and by transmission elements for a rotational movement.

7. Separator according to one of the preceding claims, **characterised in that** the motor (1) is arranged on the frame (I) between the eccentric shafts (2) on the outside and in the middle.

8. Separator according to one of the preceding claims, **characterised in that** toothed belts (15, 16) with correspondingly designed toothed belt pulleys (18) are provided as transmission elements to set the eccentric tubes (2) in a rotational movement.

9. Separator according to one of the preceding claims, **characterised in that** adjacent eccentric tubes (2) are driven by synchronisation belts (15).

10. Separator according to one of the preceding claims, **characterised in that** the eccentric tube (2) is closed at the front end by a cover.

## Revendications

1. Séparateur, en particulier séparateur balistique pour séparer les déchets mixtes, au moins deux palettes (11, 12) ou bandes disposées côte à côte étant disposées de manière mobile dans un cadre (I) et formant ainsi un fond (II), le fond étant disposé incliné par rapport à la surface d'installation du séparateur dans le cadre (I) et le fond (II) étant monté sur au moins un côté au niveau d'un arbre ou sur celui-ci au niveau d'un support de palette, de telle sorte que le fond (II) puisse être placé dans un mouvement rotatif, une unité d'entraînement étant prévue pour générer le mouvement rotatif qui entraîne le au moins un arbre,
**caractérisé en ce que**
l'arbre est prévu sous forme de tube extérieur (2) monté excentré, sous forme de tube excentrique (2), des disques excentriques (201) étant fixés ou attachés dans le tube excentrique (2) sur un arbre intérieur (202), entre le disque excentrique (201) et le tube excentrique (2) un palier (203) est prévu et le support de palette (110, 120) est disposé sur le tube excentrique (2),
**en ce que**, en vue latérale, au moins deux tubes excentriques (2) disposés côte à côte sont prévus, dont les arbres internes (202) ont un déplacement angulaire,
**en ce que** les supports de palettes (110, 120) sont formés d'éléments à ressorts à lames (10, 40) et **en ce que** les éléments à ressorts à lames (10, 40) des supports de palettes (110, 120) sont montés de manière à ne permettre qu'un jeu longitudinal afin d'empêcher les palettes (11, 12) de se toucher mutuellement sur leurs flancs.

2. Séparateur selon la revendication 1, **caractérisé en ce que** le décalage d'angle de rotation est compris entre 120 et 180 degrés.

3. Séparateur selon l'une quelconque des revendications précédentes, **caractérisé en ce que** quatre tubes excentriques (2) sont prévus, deux tubes excentriques (2) comme première paire de tubes excentriques (41) à l'extrémité supérieure du fond (I) dans le sens d'installation et deux autres tubes excentriques (2) comme deuxième paire de tubes excentriques (42) à l'extrémité inférieure du fond (I).

4. Séparateur selon l'une quelconque des revendications précédentes, **caractérisé en ce que** le fond (I) est formé par 2, 3, 4, 6, 8, 9 ou 10 palettes (11, 12) disposées côte à côte.

5. Séparateur selon l'une quelconque des revendications précédentes, **caractérisé en ce qu'**un support de palette (110, 120) est prévu pour chaque palette (11, 12).

6. Séparateur selon l'une quelconque des revendications précédentes, **caractérisé en ce que** l'unité d'entraînement est formée par un moteur (1) et par des éléments de transmission pour un mouvement rotatif.

7. Séparateur selon l'une quelconque des revendications précédentes, **caractérisé en ce que** le moteur (1) est disposé sur le cadre (I) entre les arbres excentriques (2) à l'extérieur et au milieu.

8. Séparateur selon l'une quelconque des revendications précédentes, **caractérisé en ce que** des courroies dentées (15, 16) avec des poulies à courroies dentées (18) conçues en conséquence sont prévues comme éléments de transmission afin de placer les tubes excentriques (2) dans un mouvement de rotation.

9. Séparateur selon l'une quelconque des revendications précédentes, **caractérisé en ce que** les tubes excentriques (2) adjacents sont entraînés par des courroies de synchronisation (15).

10. Séparateur selon l'une quelconque des revendications précédentes, **caractérisé en ce que** le tube excentrique (2) est fermé à l'avant par un couvercle.
